# EUROPEAN PATENT APPLICATION

(11) **EP 3 567 402 A1**
(43) Date of publication of application: **13.11.2019**
(21) Application number: 18177060.3
(22) Date of filing: 11.06.2018
(51) Int. Cl.: G01S 13/93, B60D 1/24

(54) **RADAR SYSTEM FOR TRAILER VEHICLE**

(30) Priority: 08.05.2018 TW 107205987 U
(71) Applicant: CUB Elecparts Inc., Changhua County (TW)
(72) Inventor: YU, San-Chuan, CHANGHUA COUNTY (TW); LI, Cheng-Hsin, CHANGHUA COUNTY (TW); LIANG, Wei-Chang, CHANGHUA COUNTY (TW)
(74) Representative: Becker Kurig Straus

(57) **Abstract**

A radar system **(40)** installed in a trailer vehicle **(10)** including a master vehicle **(20)** having a main connector **(21)** disposed at a rear side thereof and a slave vehicle **(30)** having a sub connector **(31)** disposed at a front side thereof and pivotally connectable to the main connector **(21)** is disclosed to include a host unit **(50)** mounted in the master vehicle **(20)** and a radar **(60)** mounted at the slave vehicle **(30)** and electrically connected to the host unit **(50)** after connection between the main connector **(21)** and the sub connector **(31).** Thus, this arrangement achieves the proposed efficacy and purpose of the present invention to facilitate electrical connection and disconnection between the host unit **(50)** and the radar **(60),** allowing the driver to learn the information of the warning signal generated by the radar **(60).**

## Description

### BACKGROUND OF THE INVENTION

### 1. Field of the Invention

The present invention relates to vehicle radar technology and more particularly, to a radar system for used in a trailer vehicle.

### 2. Description of the Related Art

With the recent booming camping habits, the demand for trailers for camping has also gradually increased. The original RVs, sedans or SUVs are provided with a trailer to constitute camping trailers for camping. However, due to the large volume of the body of the camping trailer, when the driver of the RV, the sedan or the SUV wants to make a turn or to reverse the vehicle during driving, the body of the trailer often blocks the driver's line of sight. In the long run, it is inconvenient for the driver.

Therefore, it is desirable to provide a trailer vehicle radar system that effectively solves the aforesaid problems.

### SUMMARY OF THE INVENTION

The present invention has been accomplished under the circumstances in view. It is the main object of the present invention to provide a radar system practical for use in a trailer vehicle, which facilitates electrical connection and disconnection between the host unit and the radars and has a warning effect to help the driver in making judgment.

To achieve this and other objects of the present invention, a radar system is installed in a trailer vehicle. The trailer vehicle comprises a master vehicle and a slave vehicle. The master vehicle comprises a main connector mounted at a rear side thereof. The slave vehicle comprises a sub connector mounted at a front side thereof to face toward the main connector of the master vehicle and pivotally connectable to the main connector of the master vehicle. The radar system comprises an electrical socket mounted at the master vehicle, an electrical plug mounted at the slave vehicle, a host unit and a radar.

The host unit is mounted in the master vehicle, comprising an electrical wire electrically connected to the main connector of the master vehicle or the electrical socket.

The radar is mounted at the slave vehicle, comprising an electrical wire that is electrically connected to the sub connector of the slave vehicle or the electrical plug for conduction with the electrical wire of the host unit through the main connector of the master vehicle or the electrical socket.

Preferably, the radar protrudes over the rear side of the slave vehicle or is mounted at the junction between the rear side of the slave vehicle and one lateral long side of the slave vehicle to incline toward the rear side of the slave vehicle.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a schematic top view of a trailer vehicle radar system in accordance with a first embodiment of the present invention.
FIG. 2 is a schematic top view illustrating an operation status of the trailer vehicle radar system in accordance with the first embodiment of the present invention.
FIG. 3 is a schematic top view of a trailer vehicle radar system in accordance with a second embodiment of the present invention.

### DETAILED DESCRIPTION OF THE INVENTION

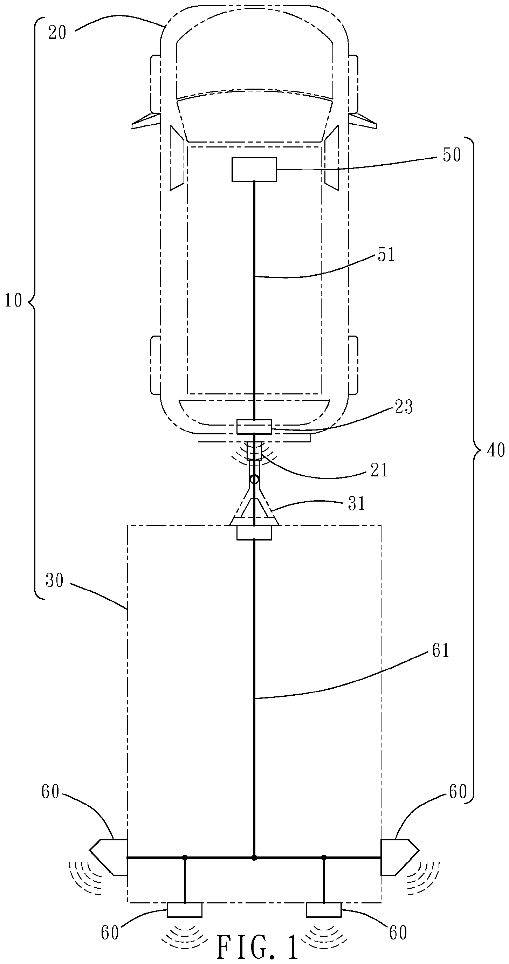

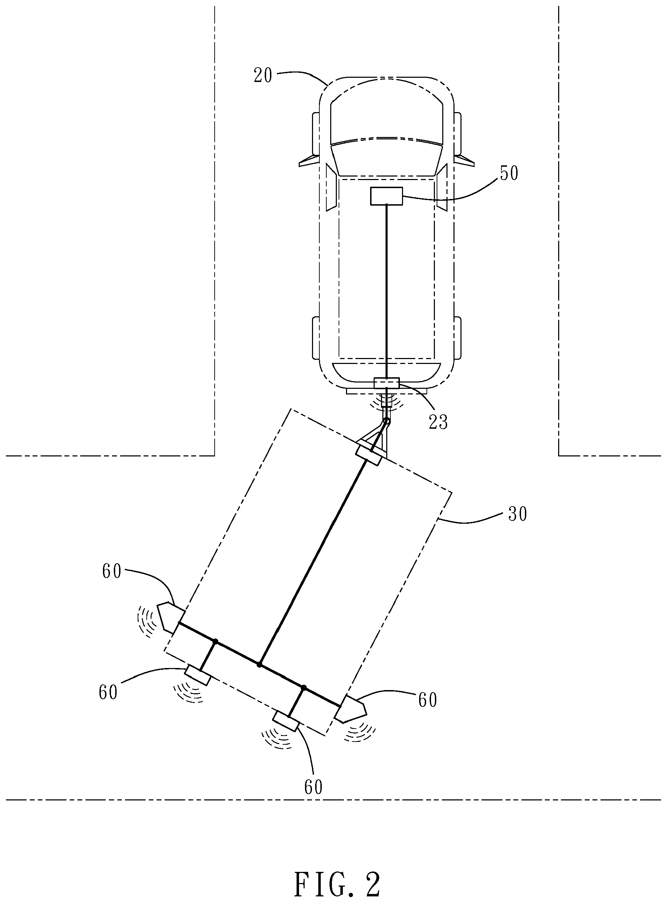

Referring to FIGS. 1 and 2, a trailer vehicle radar system in accordance with a first embodiment of the present invention is shown. As illustrated, the radar system **40** is installed in a trailer vehicle **10.** The trailer vehicle **10** comprises a master vehicle **20** and a slave vehicle **30.** The radar system **40** comprises a host unit **50** and four radars **60.**

The master vehicle **20** comprises a main connector **21** and a reversing radar **23** respectively mounted at a rear side thereof. It is worth mentioning that the master vehicle **20** can be a RV (Recreation Vehicle), sedan or SUV (Sport Utility Vehicle). The main connector **21** can be a main component of a latching device, magnetic fastener or hook fastener consisting of a metal, semiconductor or superconductor having a conductive function. The reversing radar **23** detects the direction of travel and will alarm if there is an object approaching the rear of the master vehicle **20.**

The slave vehicle **30** comprises a sub connector **31** mounted at a front side thereof to face toward the main connector **21** of the master vehicle **20** and is electrically and pivotally connectable to the main connector **21** of the master vehicle **20.** It is worth mentioning that the slave vehicle **30** can be a trailer for camping trailer, truck trailer or large joint vehicle. Further, the sub connector **31** of the slave vehicle **30** is a subcomponent of the latching device, magnetic fastener or hook fastener consisting of a metal, semiconductor or superconductor having a conductive function.

The host unit **50** is mounted in the master vehicle **20** comprising an electrical wire **51** electrically connected with the main connector **21** of the master vehicle **20.**

The radars **60** are respectively protrudingly mounted at a rear side and two opposite lateral long sides of the body of the slave vehicle **30.** The two of radars **60** that are respectively protrudingly mounted at the two opposite lateral long sides of the body of the slave vehicle **30** form an inclination angle with the respective lateral long side of the body of the slave vehicle **30.** Preferably, the other two of radars **60** at the two opposite lateral long sides of the body of the slave vehicle **30** both or individually incline toward the rear side of the body of the slave vehicle **30.** Each radar **60** comprises an electrical wire **61** electrically connected to the sub connector **31** of the slave vehicle **30** so that the main connector **21** of the master vehicle **20** can be electrically coupled to the electrical wire **51** of the host unit **50.**

According to the radar system **40** disclosed in the first preferred embodiment of the present invention, which is suitable for installation in the trailer vehicle **10,** the desired effect is:
1. It has means that facilitates electrical connection and disconnection. Referring to FIG. 1 again, when wishing to connect the master vehicle **20** of the trailer vehicle **10** and the slave vehicle **30** in series, pivotally connect the sub connector **31** of the slave vehicle **30** to the main connector **21** of the master vehicle **20,** at this time, the electrical wire **51** of the host unit **50** of the master vehicle **20** is electrically connected to the sub connector **31** of the main connector **21** to achieve electrical connection with the electrical wires **61** of the radars **60** at the slave vehicle **30.** Further, when wishing to disconnect the slave vehicle **30** from the master vehicle **20,** disconnect the sub connector **31** of the slave vehicle **30** from the main connector **21** of the master vehicle **20.** In other words, it achieves the proposed efficacy and purpose of the present invention to facilitate electrical connection and disconnection between the host unit **50** and the radars **60.**
2. It provides individual warnings to facilitate driver's judgment. Referring to FIG. 2 again, as described above, when the driver connects the host unit **50** with the radars **60** at the slave vehicle **30,** the host unit **50** provides a radar activation signal through the electrical wires **51,61** to the radars **60** at the slave vehicle **30** to activate the radars **60;** when the driver drives, turns or reverses the master vehicle **20,** the driver can learn the information of warning signals generated by the radars **60** at the slave vehicle **30** through the alert unit (such as buzzer or warning light) of the host unit **50.** Thus, the accident caused by driver due to driving dead angles will be greatly reduced.

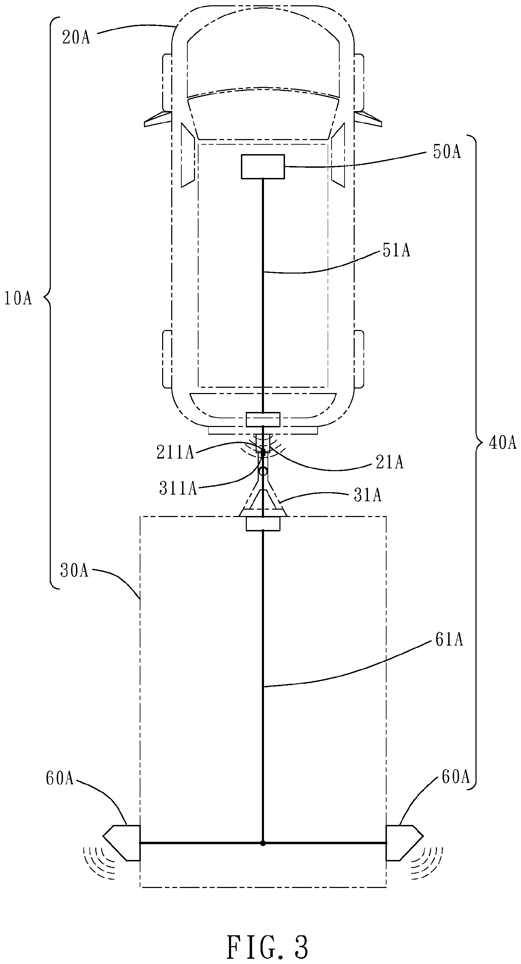

FIG. 3 illustrates a radar system **40A** installed in a trailer vehicle **10A** in accordance with a second embodiment of the present invention. This second embodiment is substantially similar to the aforesaid first embodiment. Similarly, the trailer vehicle **10A** comprises a master vehicle **20A** and a slave vehicle **30A.** The master vehicle **20A** comprises a main connector **21A** mounted at a rear side thereof. The slave vehicle **30A** comprises a sub connector **31A** mounted at a front side thereof to face toward the main connector **21A** of the master vehicle **20A** and pivotally connectable to the main connector **21A** of the master vehicle **20A.** The exceptions are outlined hereinafter:
The radar system **40A** provides only two radars **60A** that are respectively mounted at the two opposite lateral long sides of the slave vehicle **30A** near its rear side. Preferably, these two radars **60A** are inclined at the same time or in different directions toward the rear side of the slave vehicle **30A.** It is worth mentioning that in an alternate form of this second embodiment, the radar system **40A** simply provides one single radar **60A** that is mounted at one lateral long side of the slave vehicle **30A** near its rear side.

The radar system **40A** further comprises an electrical socket **211A** and a mating electrical plug **311A.** The electrical socket **211A** is mounted in the main connector **21A** of the master vehicle **20A** and electrically connected to the electrical wire **51A** of the host unit **50A.** The electrical plug **311A** is mounted at the sub connector **31A** of the slave vehicle **30A** to face toward the electrical socket **211A** in the main connector **21A** of the master vehicle **20A** and electrically connected to the of the electrical wires **61A** of the radars **60A.**

When wishing to connect the master vehicle **20A** of the trailer vehicle **10A** and the slave vehicle **30A** in series, pivotally connect the sub connector **31A** of the slave vehicle **30A** to the main connector **21A** of the master vehicle **20A,** and then connect the electrical plug **311A** at the sub connector **31A** of the main connector **21A** to electrical socket **211A** in the main connector **21A** of the master vehicle **20A.** At this time, the host unit **50A** in the master vehicle **20A** is electrically connected with the electrical wires **61A** of the radars **60A** via the electrical wire **51A,** the electrical plug **311A** and the electrical socket **211A.**

## Claims

1. A radar system **(40)** installed in a trailer vehicle **(10)** comprising a master vehicle **(20)** and a slave vehicle **(30),** said master vehicle **(20)** comprising a main connector **(21)** mounted at a rear side thereof, said slave vehicle **(30)** comprising a sub connector (31) mounted at a front side thereof to face toward said main connector **(21)** of said master vehicle **(20)** and pivotally connector to said main connector **(21)** of said master vehicle **(20),** the radar system **(40)** comprising:
a host unit **(50)** mounted in said master vehicle **(20),** said host unit **(50)** comprising an electrical wire **(51)** electrically connected to said main connector **(21)** of said master vehicle **(20);** and
at least one radar **(60)** mounted on said slave vehicle **(30),** each said radar **(60)** comprising an electrical wire **(61)** electrically connected to said main connector **(21)** of said master vehicle **(20);**
wherein said host unit **(50)** provides a radar activation signal through the electrical wire **(51),(61)** thereof to each said radar **(60)** to activate each said radar **(60)** when said at least one radar **(60)** is electrically connected to said host unit **(50).**

2. A radar system **(40A)** installed in a trailer vehicle **(10A)** comprising a master vehicle **(20A)** and a slave vehicle **(30A),** said master vehicle **(20A)** comprising a main connector **(21A)** mounted at a rear side thereof, said slave vehicle **(30A)** comprising a sub connector **(31A)** mounted at a front side thereof to face toward said main connector **(21A)** of said master vehicle **(20A)** and pivotally connector to said main connector **(21A)** of said master vehicle **(20A),** the radar system **(40A)** comprising:
an electrical socket **(211A)** mounted in said main connector **(21A)** of said master vehicle **(20A);**
an electrical plug **(311A)** mounted at said sub connector **(31A)** of said slave vehicle **(30A)** and electrically connectable to said electrical socket **(211A);**
a host unit **(50A)** mounted in said master vehicle **(20A),** said host unit **(50A)** comprising an electrical wire **(51A)** electrically connected to said electrical socket **(211A);** and
at least one radar **(60A)** mounted at said slave vehicle **(30A),** each said radar **(60A)** comprising an electrical wire **(61A)** electrically connected to said electrical plug **(311A)** for conduction with the electrical wire **(51A)** of said host unit **(50A)** electrically;
wherein when said host unit **(50A)** is switched to an alert mode, said host unit **(50A)** transmits a radar activation signal through the electrical wire **(51A)** of said host unit **(50A),** said electrical socket **(211A),** said electrical plug **(311A)** and the electrical wire **(61A)** of each said radar **(60A)** to each said radar **(60A)** to activate each said radar **(60A).**

3. The radar system as claimed in claim 1 or 2, wherein each said radar **(60),(60A)** protrudes over the rear side of said slave vehicle **(30),(30A).**

4. The radar system as claimed in claim 1 or 2, wherein each said radar **(60),(60A)** protrudes over the junction between one respective lateral long side of said slave vehicle **(30),(30A)** and the rear side of said slave vehicle **(30),(30A).**

5. The radar system as claimed in claim 4, wherein said radar **(60),(60A)** is inclined toward the rear side of said slave vehicle **(30),(30A),** forming an inclination angle with each of two opposite lateral long sides of said slave vehicle **(30),(30A).**

6. The radar system as claimed in claim 1 or 2, wherein the number of said at least one radar **(60),(60A)** is plural, and the multiple said radars **(60),(60A)** respectively protrude over the rear side of said slave vehicle **(30),(30A).**

7. The radar system as claimed in claim 1 or 2, wherein the number of said at least one radar **(60),(60A)** is plural, and the multiple said radars **(60),(60A)** respectively protrude over the junctions between the rear side of said slave vehicle **(30),(30A)** and the two opposite lateral long sides of said slave vehicle **(30),(30A).**

8. The radar system as claimed in claim 7, wherein the number of said at least one radar **(60),(60A)** is plural, and the multiple said radars **(60),(60A)** respectively incline toward the rear side of said slave vehicle **(30),(30A),** forming an inclination angle with each of the two opposite lateral long sides of said slave vehicle **(30),(30A).**
